(19) Europäisches Patentamt
European Patent Office
Office européen des brevets

(11) Numéro de publication: **0 097 089**
**A1**

## (12) DEMANDE DE BREVET EUROPEEN

(21) Numéro de dépôt: 83401145.4

(22) Date de dépôt: 06.06.83

(51) Int. Cl.³: **F 16 L 37/12**

(30) Priorité: 08.06.82 FR 8209916

(43) Date de publication de la demande: 28.12.83
Bulletin 83/52

(84) Etats contractants désignés: **CH DE GB IT LI SE**

(71) Demandeur: **INDUSTRIA S.A., 28 Avenue Clara, F-94420 Le Plessis-Trevise (FR)**

(72) Inventeur: **Bodin, Georges Emile Roger, 159 Grande Rue, F-92310 Sevres (FR)**
Inventeur: **Martin, Claude Gaston Hippolyte, 17 rue du Bas Boulard, F-94370 Sucy en Brie (FR)**
Inventeur: **Poirier, Pierre Henri Gabriel, 20 Rue Esnault Pelleterie, F-91560 Crosnes (FR)**

(74) Mandataire: **Viard, Jean, Cabinet VIARD 28 bis, avenue Mozart, F-75016 Paris (FR)**

(54) Dispositif d'accouplement autoverrouillable.

(57) Dispositif d'accouplement autoverrouillable comprenant une partie dixe à l'intérieur de laquelle pénètre une partie mobile, les deux parties étant accouplées par un organe de verrouillage dont la mise in place est sous la dépendance du déplacement d'une douille coulissante.

Les organes de verrouillage sont constitués par des crochets (8) appliqués dans une gorge (28) de la partie mobile (17) par une butée (7), les crochets (8) pivotant autour d'axes (6), de déplacement de la douille (5) étant provoqué par introduction d'un fluide sous pression.

Applications: Raccords de canalisations à haute pression, connexions d'organes mécaniques, etc.

## Dispositif d'accouplement autoverrouillable-

La présente invention a pour objet un dispositif d'accouplement autoverrouillable destiné au raccordement de canalisation de fluides sous haute pression, ou à la fixation d'outils sur un support.

On connait déjà des raccords hydrauliques comprenant une partie mâle venant s'encastrer dans une partie femelle en assurant une bonne étanchéité, la liaison ainsi formée étant verrouillée par coopération d'une bague, solidaire de la partie femelle avec un élément de la partie mâle, la bague précitée pouvant coulisser par rapport à la partie femelle. Cette seconde liaison donne la résistance mécanique nécessaire au maintien de la portée des éléments assurant l'étanchéité.

Dans un dispositif plus évolué, la liaison mécanique entre les parties mâle et femelle est consolidée par la descente de billes portées par l'une des parties dans une gorge portée par l'autre. La position correcte des deux pièces du raccord l'une par rapport à l'autre est ainsi établie d'une manière fiable et ces dispositifs, en usage courant, notamment dans l'aviation, peuvent connecter des canalisations supportant des pressions internes de l'ordre de 200 bars.

Il ne parait toutefois pas possible de les utiliser pour des pressions notablement supérieures. En effet, si les billes sont choisies pour leur mobilité, cette caractéristique provient de leur surface de contact, pratiquement ponctuelle, avec leur support. Il en résulte que les efforts qui peuvent être supportés par un ensemble de billes doivent être limités à défaut de quoi il se produit des matages, des empreintes, voire des perforations.

Un dispositif d'accouplement autoverrouillable est décrit dans le brevet US-A-2 888 278. Dans ce dispositif, le verrouillage de l'accouplement est obtenu par des crochets portés par la partie femelle et montés pivotants autour d'axes orthogonaux à l'axe de symétrie du raccord. Une came, formée dans une bague mobile sur la partie femelle, provoque le pivotement des crochets et leur pénétration à l'intérieur d'une gorge prévue dans la partie mâle. Ce dispositif faisant appel à des cames pour le verrouillage et le déverrouillage est extrêmement compliqué, et ne se prête pas à une automatisation.

Un premier objet de la présente invention est un dispositif d'accouplement de canalisations haute pression pouvant supporter des pressions supérieures à 200 bars, sans détérioration.

Par ailleurs, la structure des dispositifs connus est conçue pour résister de manière satisfaisante aux efforts radiaux qui résultent de la pression hydrostatique interne aux canalisations. De nouvelles machines apparaissent dans l'industrie qui demandent des accouplements parfaitement étanches, même pour les très hautes pressions mais qui puissent, de surcroît, supporter des efforts mécaniques se traduisant au niveau de l'accouplement par des efforts d'arrachement d'une pièce par rapport à l'autre.

Un second objet de la présente invention est un dispositif d'accouplement qui puisse soutenir des efforts mécaniques.

Enfin, dans de nombreuses applications, il est souvent nécessaire d'accoupler et de désaccoupler des parties d'organes mécaniques de façon à pouvoir intervenir sur des sous-ensembles ou pour raccorder successivement plusieurs pièces à une base unique.

Un troisième objet de la présente invention est un dispositif d'accouplement suffisamment simple pour que ledit accouplement puisse être automatisé, si nécessaire.

Selon la présente invention, le dispositif d'accouplement autoverrouillable comprenant une partie fixe et une partie mobile, la partie fixe étant munie d'une douille coulissante dont le mouvement relatif provoque le mouvement d'au moins un organe de verrouillage formant crochet, monté pivotant autour d'un axe orthogonal à l'axe principal de l'accouplement et dont la tête s'insère dans un logement prévu dans la partie mobile sous l'action du coulissement de la douille, est caractérisé en ce que la douille est reliée par des ajustages à des canalisations de fluide sous pression et détermine autour du corps de la partie fixe deux chambres à volume variable, la partie avant de la douille comportant des moyens formant came destinés à coopérer avec la partie arrière d'au moins un crochet de verrouillage.

Bien entendu, la désignation d'une partie fixe et d'une partie mobile est parfaitement arbitraire et les structures des deux éléments doivent simplement être complémentaires.

De préférence, la partie fixe ou femelle comprend au moins trois crochets ce qui assure une bonne liaison dans l'espace. La résistance mécanique à l'arrachement dépendant de la surface portée des crochets de verrouillage, plus les efforts à soutenir seront importants, plus le nombre de crochets sera grand. Ainsi, le verrouillage par des billes est remplacé par des contacts plans de quelques mm2 de surface ce qui permet de résoudre les problèmes précédemment mentionnés.

D'autres caractéristiques et avantages de l'invention apparaîtront au cours de la descritpion qui va suivre de modes de réalisation particuliers, donnés uniquement à titre d'exemples non limitatifs, en regard des dessins qui représentent :
- la figure 1, une première partie d'un dispositif d'accouplement en demi-coupe qui sera désignée par la suite comme la partie de base ou partie fixe ou partie femelle ;
- la figure 2, une seconde partie d'un dispositf en demi-coupe, destinée à être connectée à la première partie, désignée par la suite par élément à raccorder ou partie mâle ou mobile ;
- la figure 3, un accouplement en demi-coupe des pièces représentées sur les figures 1 et 2 ;
- la figure 4, une vue d'une sécurité complémentaire ;
- la figure 5, une autre application du dispositif selon l'invention.

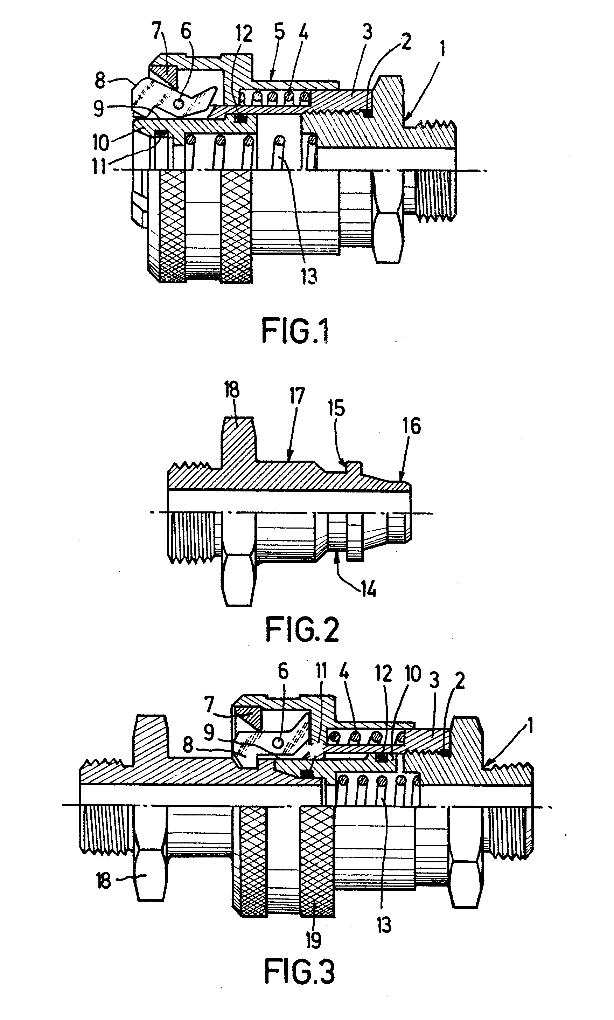

La fig.1 est une demi-coupe de la partie fixe ou de l'élément de base sur laquelle viendra s'accoupler un autre élément. Dans l'exemple représenté, les deux éléments constituent un raccord haute pression. Sur la Fig.1, la partie dite fixe se compose d'un corps 3 muni d'un embout de raccordement hydraulique 1 destiné à être vissé sur une canalisation reliée à une centrale hydraulique, par exemple. L'étanchéité entre l'embout 1 et le corps 3 est assurée par un joint torique 2. A l'intérieur du corps 3 coulisse une valve 10 repoussée vers l'avant du corps 3 sous l'action d'un ressort 13. L'étanchéité de la valve 10 dans le corps 3 est assurée par un joint 12. La valve 10 est elle-même équipée d'un joint torique 11. Cette valve a pour but d'assurer l'étanchéité de la pièce femelle lorsque la partie mâle ne lui est pas associée, cette étanchéité pouvant être assurée par différents moyens (non représentés). A la partie avant du corps 3, trois fentes (dont une seule apparait sur la coupe de la Fig.1) permettent le débattement de crochets 8 articulés autour d'axes 6 orthogonaux à l'axe de la pièce. Une douille extérieure ou manchon 5 équipée de butées 7, dont une seule apparait sur la Figure, coulisse sur le corps 3. ELle est armée par un ressort hélicoïdal 4, qui la repousse constamment vers l'avant de la pièce.

La Fig.2 est une demi-coupe de la pièce mâle ou mobile. Elle se compose simplement d'un corps principal 17 muni d'un filetage de raccordement hydraulique désigné par 18 et, à l'opposé du filetage, d'une portée tronconique 16 destinée à coopérer avec la valve 10 de la Fig.1. Une collerette 15 définit une gorge 14 à l'intérieur de laquelle viendront porter les têtes des crochets 8.

Le fonctionnement de ce raccord est le suivant : lorsque la partie mobile commence à pénétrer dans la partie fixe, elle est guidée par la partie tronconique 16 qui assure le centrage et l'étanchéité grâce au joint 11. La valve 10 est repoussée vers l'arrière en comprimant le ressort 13. La bague 15 ayant le même diamètre que la valve, les crochets 8 conservent leur position de la Fig.1 jusqu'à ce que la gorge 14 se présente sour leurs têtes. Dès que la gorge 14 arrive au-dessous des têtes des crochets 8, ceux-ci basculent dans la gorge sous l'action de la butée 7 formant came, elle-même poussée vers l'avant (vers la gauche sur la Fig.) par le ressort 4. La douille 5 peut alors avancer et elle vient en butée contre le talon des crochets 8. Dans cette position, qui est celle qui est représentée sur la Fig.3, la butée 7 est en contact avec la surface arrière de chacun des crochets en des points situés en avant des axes 6 ce qui évite tout déverrouillage. Les crochets 8 sont alors parallèles à l'axe du raccord. Au cours du fonctionnement, l'effort de maintien est assuré par la portée des crochets contre la paroi de la gorge 14 formée par la collerette 15 et aussi par réaction sur les axes 6. Les surfaces d'appui sont réelles et capables de supporter des efforts considérables.

Le déverrouillage s'effectue simplement en tirant la douille 5 vers la droite de la Fig.3. Ce déplacement provoque la compression du ressort 4 et la portée de la butée 7 contre le talon des crochets 8 ce qui entraîne leur basculement autour des axes 6 et le dégagement des têtes de crochets hors de la gorge 14. La partie mobile est alors libérée et séparée de la partie fixe automatiquement par l'action du ressort 13.

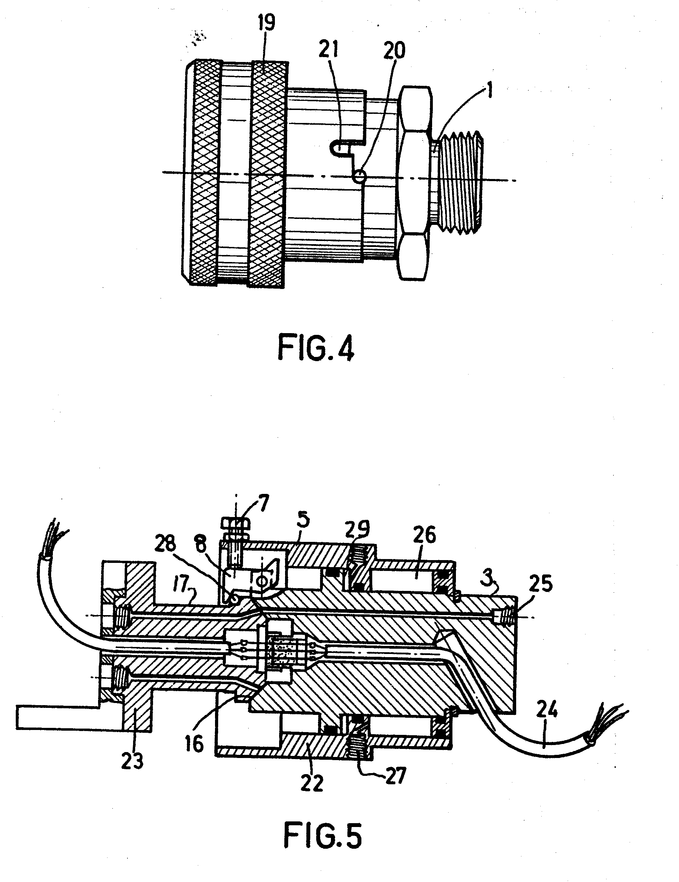

Ce déverrouillage peut s'effectuer à la main par traction sur le moletage 19 de la douille 5. Afin d'éviter toute ouverture accidentelle du raccord, la Fig.4 représente un dispositif de sécurité consistant en une rainure 21 coopérant avec un téton 20, des éléments identiques pouvant être diamétralement opposés à la rainure 20 et au téton 21 qui apparaissent sur la Fig.4. Dans ce cas, le basculement des crochets 8 provient uniquement de la partie des talons sur l'arrière de la face interne de la douille 5, le verrouillage des crochets résultant de l'amenée des cames 7 contre le dos des crochets par rotation.

Lors de l'accouplement, un ressort approprié donne une légère torsion qui fait tourner la douille 5 de sorte que les tétons automatiquement prennent la position de blocage représentée sur la Fig.4. On comprend qu'une simple traction sur la douille est contrebalancée par réaction du téton 20 contre le bord de la rainure 21. Il faut donc, pour provoquer l'ouverture du dispositif, tourner la douille 5, puis la tirer. Cette disposition évite une ouverture accidentelle par simple traction sur la douille.

On notera que le verrouillage d'un dispositif selon l'invention est positif. C'est-à-dire que plus la force de désaccouplement est importante, plus l'accouplement devient résistant puisque les crochets sont en quelque sorte coincés entre les deux pièces. Les efforts de désaccouplement peuvent donc être considérables sans qu'il y ait ouverture du raccord. Cette caractéristique permet d'utiliser un tel dispositif pour réaliser une liaison mécanique entre une pièce de base et différents outils interchangeables.

Une application de ce type est représentée sur la Fig.5, qui est une coupe d'un accouplement réalisé avec un dispositif selon l'invention. La pièce fixe est par exemple solidaire du corps d'un robot ou de tout autre ensemble alors que la partie mobile est solidaire de la main du robot et peut porter différents outils ou manipulateurs. Un problème plus spécifique de cette application résulte de ce que les forces qui sont appliquées varient en fonction des tâches à accomplir. Il est par exemple évident que le raccord sera sollicité de manière différente dans le cas du transport d'une petite pièce et dans celui du perçage de ladite pièce.

Il est de plus souhaitable que l'accouplement puisse être automatisé de manière à pouvoir pleinement profiter du mode opératoire des automates.

7.

Le dispositif représenté sur la Fig.5 doit donc pouvoir transmettre non seulement un fluide quelconque tel que de l'air sous pression ou de l'huile mais également permettre le passage de conducteurs électriques, et plus généralement, l'ensemble des commandes et de l'énergie nécessaires au fonctionnement de l'organe raccordé.

On retrouve sur la Fig.5, le corps 3 de la partie de base ou fixe et le corps 17 de la partie mobile. Comme précédemment, ces deux parties sont solidarisées par des crochets 8, dont un seul apparaît sur la Fig.5, qui coopèrent avec une gorge portée par la partie mobile. Les axes 6 des crochets peuvent être constitués par un jonc torique, ou par tout autre moyen. De préférence, et compte tenu de l'importance des efforts à transmettre , les têtes de crochet s'accrochent, de préférence, sur de petits barreaux portant la référence 28 qui jouent le rôle de la gorge 14 dans l'exemple précédent et qui peuvent être traités superficiellement pour permettre la réalisation du corps 17 en un alliage léger. Les butées 7 sont avantageusement réglables et constituées, par exemple, par des vis vissées dans la douille 5. Comme précédemment, la douille 5 est mobile par coulissement sur le corps 3. Toutefois, les ressorts ont été supprimés et la douille 5 forme un vérin, par exemple pneumatique, sur le corps 3. A cet effet, elle est reliée par des ajutages 27 permettant l'introduction d'air sous pression soit dans la chambre 26, soit dans la chambre 29, ces deux chambres, à volume variable, étant constituées par des espaces dégagés entre le corps 3 et la douille 5 concentrique au corps 3. Le corps 17 présente une partie avant 16 tronconique qui vient porter contre la partie correspondante du corps 3. Le corps est traversé par un nombre adapté de conduits transversaux qui correspondent à des conduits percés dans la partie mobile 17. On a représenté, à titre d'exemple, un conduit hydraulique 25 et un conduit de canalisation électrique 24 , un connecteur étant prévu au milieu de l'accouplement. La partie mobile 17 porte une platine 23 sur laquelle peuvent être montés différents outils ou pinces.Les problèmes d'étanchéité sont traités classiquement au moyen de joints qui n'ont pas été référencés.

Le fonctionnement de ce dispositif est le suivant : au début de l'accouplement, la douille 5 occupe la position arrière sur le corps 3. Les crochets sont relevés (comme représenté sur la Fig.1). La chambre 26 est de volume minimum. La partie mobile 17 est alors appliquée contre la partie évasée du corps 3. L'envoi d'air sous pression dans la chambre 26 provoque un mouvement de la douille vers l'avant. Par un effet de came entre la partie supérieure des crochets et la butée 7 réglable, ceux-ci basculent jusqu'à ce que leurs têtes viennent enserrer les barreaux 28 ce qui assure l'accrochage. Le dispositif prend alors la configuration représentée sur la Fig.5. On notera que les talons des crochets 8 ne viennent pas, contrairement à ce qui se produisait dans l'exemple précédent en butée contre la partie avant de la bague. Cette modalité n'est pas nécessaire dans la mesure où la pression de l'air dans la chambre 26 est suffisante pour maintenir la douille 5 en position avant et par là appliquer les crochets 8 sur les barreaux 28, ce qui verrouille l'accouplement. Ainsi, il est possible de commander, par action sur la pression appliquée sur le vérin, la rigidité des efforts à soutenir.

Après utilisation de l'organe, la pression est supprimée dans la chambre 26 et appliquée dans la chambre 29. La douille 5 recule et les butées 7 font pivoter les crochets 8 ce qui permet le dégagement de la partie mobile 17. Celle-ci peut donc être retirée et remplacée par une autre partie mobile portant par exemple un autre outil.

Lorsque la partie fixe est portée par un ensemble automatique, la sélection des outils et leurs accouplements peuvent être effectués sans intervention d'un ouvrier. C'est à dire que le robot choisit lui-même ses outils et les accouple successivement selon son programme interne.

REVENDICATIONS

1°) Dispositif d'accouplement autoverrouillable comprenant une partie fixe et une partie mobile, la partie fixe étant munie d'une douille coulissante dont le mouvement relatif provoque le mouvement d'au moins un organe de verrouillage formant crochet, monté pivotant autour d'un axe orthogonal à l'axe principal de l'accouplement et dont la tête s'insère dans un logement prévu dans la partie mobile sous l'action du coulissement de la douille, caractérisé en ce que la douille(5) est reliée par des ajustages (27) à des canalisations de fluide sous pression et détermine autour du corps (3) de la partie fixe deux chambres (26,29) à volume variable, la partie avant de la douille (5) comportant des moyens (7) formant came destinés à coopérer avec la partie arrière d'au moins un crochet de verrouillage (8).

2°) Dispositif d'accouplement selon la revendication 1, caractérisé en ce qu'un connecteur électrique est disposé entre la partie fixe (3) et la partie mobile (17), une canalisation électrique (24) traversant le dispositif d'accouplement.

3°) Dispositif d'accouplement selon les revendications 1 et 2, caractérisé en ce que les parties (3 et 17) sont traversées par un conduit (25).

4°) Dispositif d'accouplement selon l'une quelconque des revendications 1 à 3, caractérisé en ce que la partie mobile (17) est solidaire d'une platine porte outils (23)

5°) Dispositif selon l'une quelconque des revendications précédentes, caractérisé en ce que la longueur d'un crochet (8) est inférieure à la hauteur de l'alésage interne avant de la douille (5).

6°) Dispositif selon l'une quelconque des revendications précédentes, caractérisé en ce que la partie mobile étant réalisée en alliage léger, des barreaux (28) sont disposés sur ladite partie au-dessous des crochets (8).

10

7°) Dispositif d'accouplement autoverrouillable comprenant une partie fixe (1) et une partie mobile (17), la partie fixe (1) étant munie d'une douille coulissante (5) armée par un ressort (3), la partie avant de la douille (5) étant munie d'une pièce (7) coopérant avec la partie arrière d'un crochet (8), caractérisé en ce que le corps (1) comprend une valve (10) montée coulissante et armée par un ressort (13), la surface externe de la valve (10) étant de même diamètre qu'une collerette (15) de la partie mobile (17).

8°) Dispositif selon la revendication 7, caractérisé en ce que la douille (5) présente une couronne moletée (19), une rainure (21) étant formée dans la partie arrière de la douille (5) et coopérant avec un téton (20) pour assurer un verrouillage en rotation de la douille (5), le pivotement des crochets (8) étant provoqué par portée du talon contre la face interne de la douille (5).

0097089

1/2

FIG.1

FIG.2

FIG.3

0097089

FIG.4

FIG.5

## Office européen des brevets

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A,D | US-A-2 888 278  (TORRES et al.) <br> * Figures 3,9,11 * | 1,3,5 | F 16 L  37/12 |
| A | BE-A-  683 268  (GARBISLANDER) <br> * Figure 4 * | 1,3,5 | |

DOMAINES TECHNIQUES RECHERCHES (Int. Cl. 3)

F 16 L

Le présent rapport de recherche a été établi pour toutes les revendications

| Lieu de la recherche <br> LA HAYE | Date d'achèvement de la recherche <br> 01-09-1983 | Examinateur <br> ANGIUS P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82